# EUROPEAN PATENT APPLICATION

(11) **EP 0 967 044 A2**
(43) Date of publication of application: **29.12.1999**
(21) Application number: 98830639.5
(22) Date of filing: 23.10.1998
(51) Int. Cl.: B23K 11/11, B23K 11/18

(54) **A method for resistance electric spot welding of a first sheet of non weldable material to a second sheet of weldable metal material**

(30) Priority: 25.06.1998 IT TO980547
(71) Applicant: Garnero, Pierino, 10090 Rosta (Torino) (IT); Marchetto, Vinicio, 10128 Torino (IT)
(72) Inventor: Garnero, Pierino, 10090 Rosta (Torino) (IT); Marchetto, Vinicio, 10128 Torino (IT)
(74) Representative: Notaro, Giancarlo

(57) **Abstract**

A sheet (1) of a material which cannot be electrically welded is connected to a second sheet (2) of a weldable material by providing a through hole (3) in the first sheet having a transverse dimension substantially greater than the transverse dimension of the tips of the electrodes (8) which are used for carrying out the electric welding spot. Within the hole (3) there is provided an insert (4) of a material which can be electrically welded. The two electrodes (8) are applied so as to cause welding of the insert (4) to the second sheet (2). The insert (4) has a stop surface (7) which prevents the first sheet (1) from separating from the second sheet (2) after welding. The difference of the transverse dimensions of the tip of each electrode (8) and the insert (4) avoids any possible overheating up to the melting point of the material constituting the first sheet (1) while welding is carried out.

## Description

The present invention relates to a method for carrying out resistance electric welding spots between a first sheet made of a non weldable material and a second sheet of weldable metal material, which are superimposed on each other.

The connection by resistance electric welding of two sheets one of which is made of a material which cannot be electrically welded represents a problem in various fields of industry. For instance this problem is encountered when it is requested to connect a sheet made of a high-carbon steel (particularly when it has been subjected to a hardening treatment of any kind) or of light alloy, or also of plastic material, to another sheet of metal material which can be electrically welded.

A field in which this problem has been felt particularly is that of the automotive industry. In various applications in this field it is desired to assemble some components on a structure of sheet metal, typically a portion of a car body, by screws, while this structure does not have a thickness sufficient for forming threaded holes for the engagement of the fixing screws which are sufficiently long in order to ensure a stable connection. In the past, this problem has been solved with the aid of an anchoring plate secured to the vehicle structure. These plates are made with a thickness sufficient for forming threaded holes therein which have a length sufficient to ensure a stable connection of the component, these plates being made of a material having a relatively reduced hardness, so as to allow for the use of self-tapping screws. Alternatively the connection is provided with the aid of nuts electrically welded to the plate. Just because of the relatively high weigh of these plates as well as of the high cost of self-tapping bolts, a further solution has been proposed which has formed the subject of European patent EP-B-0 333 953, consisting in an anchor plate which is formed starting from a blank plate having a relatively reduced thickness and made of a high-carbon steel and which is subsequently subjected to progressive pressing operations in order to form anchor sleeves in one piece with the plate. In this manner, the sleeves may be formed with a length sufficient to enable an adequate threading to be formed, without having a plate of high thickness. Typically, the anchor plate proposed in the above mentioned European patent is made of a carbon steel SAE 1050 having a hardness in the range of 40 to 50 Rockwell "C". Due to the resistance of the material, it is possible to adopt a much lower thickness and then a much lighter construction with respect to the conventional anchor plates. However, the drawback of this solution lies in that the material forming the plate is not adapted to be electrically welded.

The object of the present invention is that of solving the above indicated problem by providing a method which is relatively simple and inexpensive and through which two sheets can be connected by electric welding even if one of them is made of a material which cannot be electrically welded. It is to be noted in particular that the invention aims to providing the above mentioned connection not only with reference to a sheet of a high-carbon steel which in particular has been subjected to a hardening treatment, as in the case of the above mentioned specific application, but also in general in the case of sheets made of any other material which cannot be welded, such as plastic material or aluminium.

In view of achieving the above indicated object, the invention provides a method for carrying out a resistance electric welding spot between a first sheet made of a non-weldable material and a second sheet made of weldable metal material which is superimposed to the former sheet, in which two welding electrodes are applied on the two opposite faces of the assembly of the two superimposed sheets and an electric voltage is applied to said electrodes, characterized in that at said welding spot said first sheet is provided with a through hole having a transverse dimension substantially greater than the transverse dimensions of the tip of each welding electrode, and in that in said hole there is provided an insert of weldable metal material, said insert having a stop surface in contact with the surface of said first sheet which is more remote from said second sheet, so as to prevent said first sheet from separating from said second sheet after that said insert has been welded to said second sheet.

Due the above indicated features, the two sheets are electrically welded to each other by carrying out a welding spot, although the material of one sheet cannot be welded. It is to be noted in particular that in the method according to the invention, the insert provided to enable the electric welding to be carried out has transverse dimensions which are substantially greater with respect to the transverse dimension of the tip of each welding electrode. In this manner, by applying the welding electrodes substantially at the center of the insert, the area of the latter which is affected by the current flow passing from one electrode to the other is a "core" arranged centrally with respect to the hole formed in the first sheet and therefore spaced from the edge of the hole. Thus, the non weldable material constituting the first sheet is not subjected to overheating, which instead takes place at the core, where local melting of the material constituting the second sheet welded thereto occurs. This overheating might be detrimental to the material constituting the first sheet since it might cause allotropic modifications which might give rise to cracks or a weakening of the connection.

In a preferred embodiment, the above mentioned through hole has a circular shape and the above mentioned insert is constituted by a disk having slightly smaller dimensions than the hole, the disk having an enlarged head defining an annular abutment surface which forms the above mentioned stop surface. Naturally, however, any different shape of the hole and the insert can be used.

Moreover, obviously the two sheets can be connected to each other by applying a plurality of welding spots, each made according to the above described method.

Moreover, preferably the above mentioned insert is provided with anchoring means for folding the insert on the first sheet once it has been inserted into the above mentioned hole and before said first sheet is superimposed to the second sheet. For instance, these means can be constituted by a projecting end edge of the insert which can be deformed into an annular slot formed along the edge of the hole on the face of the first sheet which is to come in contact with the second sheet. However, any other type of anchoring means can be used, as it will be clearly apparent in the following.

Further features and advantages of the invention will become apparent from the following description with reference to the annexed drawings, given purely by way of non limiting example, in which:
- figure **1** is a cross-sectional view which shows two sheets while welding is performed by means of the method according to the invention,
- figure **2** shows an embodiment of the insert provided in the method according to the invention, and
- figures **3**, **4** show two variants.

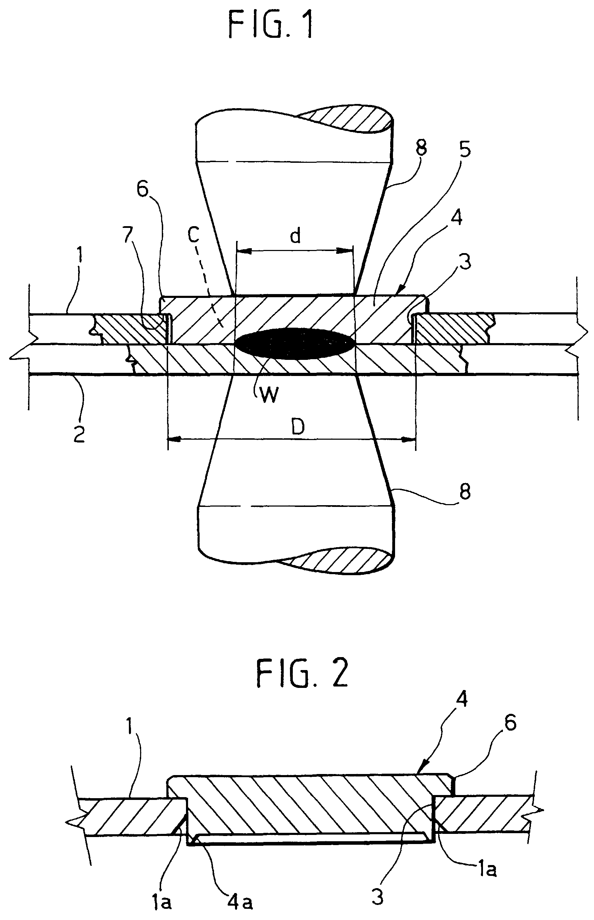

With reference to figure 1, a first sheet 1, e.g. having a thickness of 1.5 mm and made of a high-carbon steel, such as a hardened 1050 steel, which cannot be electrically welded, is superimposed to a second sheet 2 made of a weldable ferrous material, e.g. FEPO2, having a thickness of 1.4 mm.

According to the invention, at each spot of sheet 1 which is to be welded to sheet 2, the sheet 1 is provided with a through hole 3 having a diameter D. In the illustrated example, the hole 3 is circular, but it may have a polygonal shape in order to prevent relative rotation of the two sheets in case they were connected by a single framing spot. Within hole 3 there is provided an insert 4 having a body 5 in form of a circular disk having a diameter slightly smaller than the diameter D and an enlarged head 6 defining an annular abutment surface 7 which comes in contact with the surface of the first sheet 1 opposite to that which is to be superimposed to sheet 2.

Reference numerals B designate two electrodes for carrying out an electric welding spot, whose tips have a diameter d. According to the invention, the diameter D is chosen substantially greater than diameter d. For instance, in a practical embodiment, diameter D was of 12 mm and diameter d was of 6 mm, according to a 2:1 ratio. Thus, when an electric voltage is applied to the two electrodes 8, the current flowing through insert 4 and sheet 2 affects only a core C having a diameter substantially corresponding to diameter d of the tips of electrodes 8. Therefore, by applying the electrodes at the central axis of insert 4, the above mentioned core C is substantially spaced from the edge of the through hole 3 formed in sheet 1, so that the material constituting this sheet is not subjected to overheating, as instead takes place within the core C, where the melting area W is created. When welding is completed, the sheet 1 cannot be separated from sheet 2 since it is held by the annular abutment surface 7 defined by the enlarged head 6 of the insert 4.

Before the sheet 1 is superimposed to sheet 2, the insert 4 is obviously provided within hole 3 and held therein by any anchoring means. Figure 2 shows a possible example of these anchoring means, constituted by an annular end edge 4a projecting axially from the end of the insert 4 opposite to the head 6. Once the insert 4 has been inserted into hole 3 of sheet 1, the edge 4a is deformed within an annular slot 1a formed along the edge of the hole 3 adjacent to the face of sheet 1 which is to come in contact with sheet 2. Figure 2 shows the edge 4a before deformation. By this measure, the insert 4 is stably held by sheet 1 even before the latter is superimposed to sheet 2.

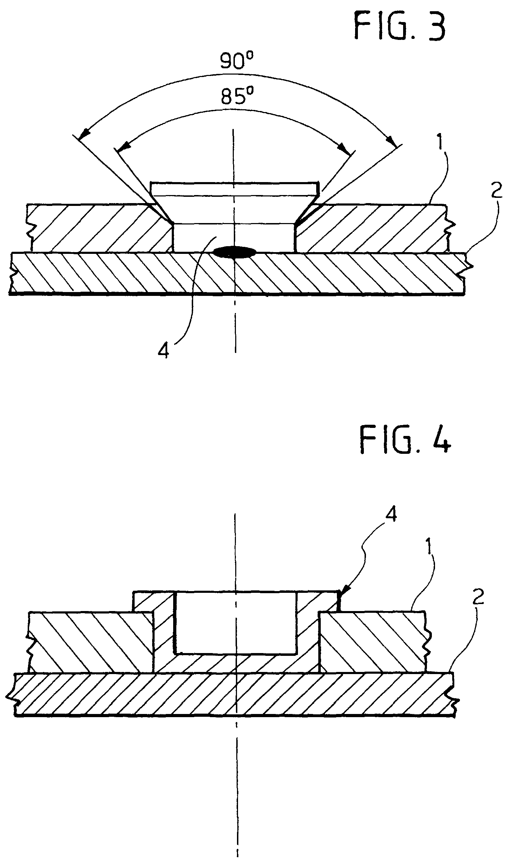

Figure 3 shows a variant in which the insert 4 is held on sheet 1 by an interference feet of conical surfaces and figure 4 shows a variant of the insert having a cavity to be used in case sheet 1 is much thicker than sheet 2, so as to assure welding quality.

Naturally, the method according to the invention may be repeated many times in order to carry out a number of welding spots between the two sheets 1, 2.

Also obviously, the invention may be applied whichever is the material used for sheet 1, such as a light alloy or a non metal material.

Furthermore, naturally, while the principle of the invention remains the same, the details of construction and the embodiments may widely vary with respect to what has been described and shown purely by way of example, without departing from the scope of the present invention.

## Claims

1. Method for carrying out a resistance electric welding spot between a first sheet (1) made of a material which cannot be electrically welded, and a second sheet (2) made of a metal material which can be welded, superimposed to the first sheet (1), in which two welding electrodes (8) are applied to the two opposite faces of the assembly of the two superimposed sheets (1, 2) and an electric voltage is applied to said electrodes (8), characterized in that at the welding spot said first sheet (1) is provided with a through hole (3) having a transverse dimension substantially greater than the transverse dimension of the tip of each welding electrode (8), and in that within said through hole (3) there is provided an insert (4) of metal material which can be electrically welded, said insert (4) having a stop surface (7) in contact with the surface of said first sheet (1) which is more remote from said second sheet (2), so as to prevent said first sheet (1) from separating from said second sheet (2) after welding of said insert (3) to the second sheet (2).

2. Method according to claim 1, characterized in that said hole (3) has a circular shape and said insert (4) has a body (5) in form of a disk, having an enlarged head (6) defining an annular abutment surface (7) which constitutes said stop surface.

3. Method according to claim 1, characterized in that said insert (4) is provided with means (1a, 4a) for anchoring the insert (4) to said first sheet (1) after that said insert (4) has been inserted into said through hole (3) and before said first sheet (1) is superimposed to said second sheet (2).

4. Method according to claim 3, characterized in that said anchoring means include a portion (4a) of the body of the insert (4) which can be deformed into a seat (1a) of said first sheet (1).

5. Method according to claim 3, characterized in that said anchoring means comprise a conical head of the insert (4) which can be fitted into a conical portion of the hole (3) of the first sheet (1).

6. Method according to claim 1, characterized in that the insert (4) has a central cavity.
